# FASCICULE DE BREVET EUROPEEN

(11) **EP 0 913 983 B1**
(45) Date de publication et mention de la délivrance du brevet: **01.06.2005**
(21) Numéro de dépôt: 98402709.4
(22) Date de dépôt: 30.10.1998
(51) Int. Cl.: H04M 7/00, H04Q 7/22

(54) **Procédé pour établir une communication entre un terminal de l'internet et un téléphone et téléphone pour la mise en oeuvre du procédé**
Verfahren zur Herstellung einer Kommunikation zwischen einem Internet Endgerät und einem Telefon und Telefon zur Ausführung dieses Verfahrens
Method for establishing a communication between an Internet terminal and a telephone and telephone for carrying out this method

(30) Priorité: 30.10.1997 FR 9713634
(43) Date de publication de la demande: 06.05.1999
(73) Titulaire: SAGEM SA, 75116 Paris (FR)
(72) Inventeur: Heurtaux, Frédéric, 13610 Le Puy Sainte Reparade (FR)
(74) Mandataire: Bloch, Gérard

(56) Documents cités:
- EP-A- 0 766 490
- EP-A- 0 777 394
- EP-A- 0 781 015
- EP-A- 0 781 016
- EP-A- 0 829 995
- WO-A-97/13382
- WO-A-97/26749
- WO-A-97/31498
- WO-A-97/33412
- WO-A-97/47118
- DE-A- 19 645 368

## Description

Dans le domaine de la communication, le réseau de l'Internet constitue un espace de communication entre une pluralité de terminaux distants de l'Internet pourvus chacun d'un modem de liaison à l'Internet. Deux terminaux distants peuvent ainsi échanger à travers le réseau de l'Internet, en léger différé, des messages écrits s'affichant à l'écran de chaque terminal dans une fenêtre de dialogue.

Par ailleurs, il existe aujourd'hui des logiciels de téléphonie sur l'Internet et des équipements audio (carte son, haut-parleur et microphone) pour terminal de l'Internet offrant aux utilisateurs de l'Internet la faculté de dialoguer entre eux en s'échangeant des messages vocaux. Au cours d'une communication vocale sur l'Internet entre deux terminaux de l'Internet, les messages vocaux sont saisis par un microphone, côté terminal émetteur, puis transformés en données vocales vocodées et transmises à travers le réseau de l'Internet vers le terminal récepteur et, après réception côté terminal récepteur, transformées à nouveau en messages vocaux diffusés par un haut-parleur.

On connaît également des téléphones comprenant une application de téléphonie sur l'Internet leur permettant de téléphoner à travers l'Internet avec un terminal, tel qu'un ordinateur, comportant lui-même une application de téléphonie sur l'Internet. Ces applications de téléphonie sont notamment destinées à coder, ou "vocoder", les données vocales transmises à travers l'Internet, suivant une méthode de vocodage déterminée permettant de comprimer les données. Il existe une très grande variété de méthodes de vocodage, dont certaines ne sont pas compatibles entre elles. Or pour qu'un téléphone et un terminal communiquent l'un avec l'autre à travers l'Internet, il convient qu'ils utilisent l'un et l'autre, respectivement, deux méthodes de vocodage compatibles. Dans le cas contraire, les données vocales transmises ne sont pas vocodées et doivent être transmises telles quelles, à haut débit. Or les débits de transmission de données sur l'Internet sont bien souvent limités, notamment par la charge du réseau. Il en résulte qu'une transmission de données non vocodées à travers l'Internet s'avère difficile, voire même impossible.

La présente invention propose d'abord de pallier cet inconvénient.

A cet effet, l'invention concerne un procédé pour établir une communication entre, d'un côté, un terminal de l'Internet, avec son adresse Internet, comprenant des moyens de connexion téléphonique au réseau de l'Internet, par une ligne téléphonique d'un réseau de communication téléphonique, et des moyens de téléphonie sur l'Internet comportant un logiciel de téléphonie sur l'Internet et au moins un haut-parleur, et, de l'autre côté, un téléphone disposant d'un accès à l'Internet, procédé au cours duquel, de l'un des côtés terminal et téléphone, on se connecte à l'Internet et on communique avec l'autre côté à travers le réseau de l'Internet, procédé caractérisé par le fait qu'on télécharge depuis l'Internet dans le téléphone des moyens de vocodage pour coder des données vocales correspondant à une communication vocale sur l'Internet.

Dans le cas où le téléphone n'a pas de moyens de vocodage compatibles avec ceux du terminal, il suffit au téléphone de télécharger depuis l'Internet des moyens de vocodage qui conviennent. On soulignera en outre que grâce à l'invention, on s'affranchit du recours à un serveur destiné à coder et à décoder les données vocales transmises, à la place du téléphone.

Avantageusement, dans le cas où on se connecte à l'Internet côté téléphone, on saisit un message vocal que l'on transforme en données vocales, on code lesdites données vocales puis on les transmet vers l'adresse Internet du terminal de l'Internet, à travers le réseau de l'Internet, et, dans le cas où le terminal de l'Internet est connecté à l'Internet, côté terminal, on reçoit les données vocales, on les décode puis on les transforme en message vocal que l'on diffuse à l'aide du haut-parleur.

Avantageusement encore, dans le cas où on se connecte à l'Internet côté terminal, on transmet vers le téléphone, à travers l'Internet, un message court d'invitation à se connecter à l'Internet afin d'établir une communication vocale avec le terminal.

Finalement, l'invention consiste à émuler un terminal de l'Internet à l'aide d'un téléphone.

L'invention concerne encore un téléphone pour la mise en oeuvre du procédé ci-dessus, comprenant des moyens de codage et de décodage de données, agencés pour coder et décoder des données correspondant à une communication vocale sur l'Internet, et des moyens pour exécuter un protocole de connexion téléphonique à l'Internet, téléphone caractérisé par le fait qu'il comprend des moyens pour télécharger depuis l'Internet un programme de codage et de décodage de données vocales d'une communication vocale sur l'Internet compatible avec au moins un logiciel de téléphonie sur l'Internet pour terminal de l'Internet.

Grâce à l'invention, on peut faire évoluer le téléphone, et plus particulièrement les moyens de vocodage qu'il intègre, suivant l'évolution de l'Internet des méthodes de vocodage.

L'invention sera mieux comprise à l'aide de la description suivante d'un mode de réalisation particulier du procédé d'établissement d'une communication vocale entre un terminal de l'Internet et un téléphone et d'une forme de réalisation particulière du téléphone et du terminal de l'Internet en référence au dessin annexé sur lequel:
- la figure 1 représente un schéma bloc fonctionnel du téléphone,
- la figure 2 représente un schéma bloc fonctionnel du terminal de l'Internet et

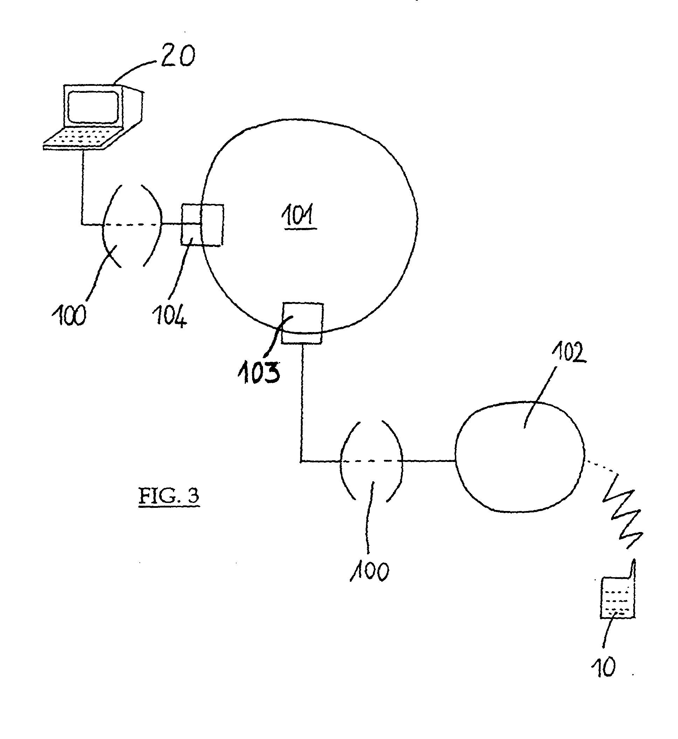

- la figure 3 représente un schéma de réseaux de communication reliant le téléphone de la figure 1 et le terminal de l'Internet de la figure 2.

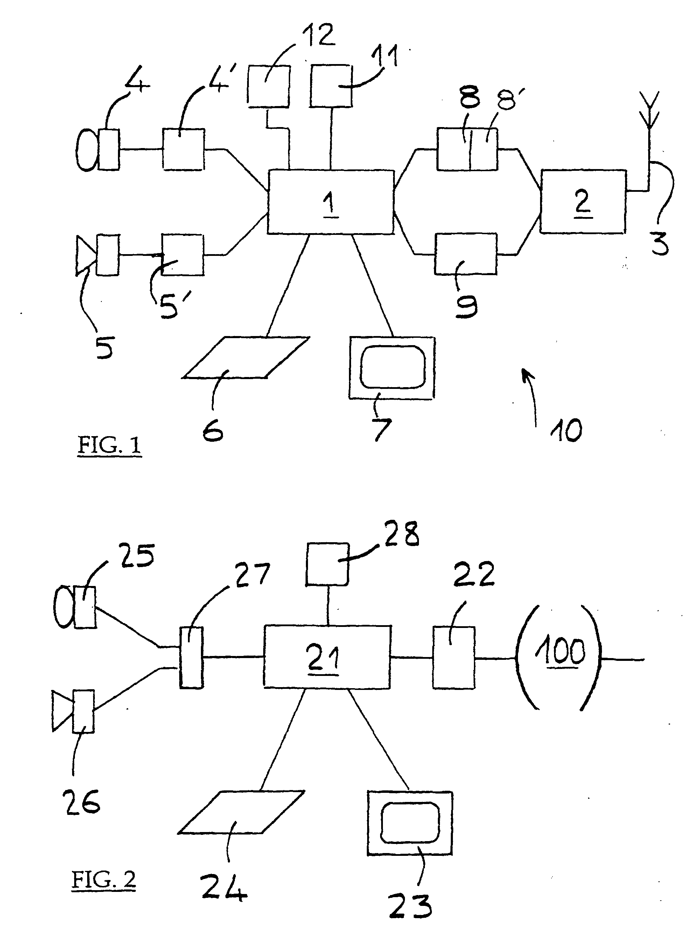

Le téléphone 10 représenté sur la figure 1 est un téléphone mobile GSM relié à un réseau cellulaire de communication téléphonique 102, comprenant un bloc de contrôle 1, en l'espèce un microprocesseur, un bloc 2 d'émission et de réception radio pourvu d'une antenne radio 3 et une interface homme-machine.

L'interface homme-machine comprend un microphone 4, un haut-parleur 5, un clavier de saisie 6 et un écran d'affichage 7, tous ces éléments étant reliés au bloc de contrôle 1, par l'intermédiaire d'un convertisseur analogique-numérique (CAN) 4' pour le microphone 4 et d'un convertisseur numérique-analogique (CNA) 5' pour le haut-parleur 5.

Le bloc radio 2 est relié au bloc de contrôle 1 avec interposition d'un vocodeur 8 et d'un codec 9 disposés en parallèle. Le vocodeur 8 est prévu pour coder des données vocales destinées à être émises par le bloc radio 2 et pour décoder des données vocales reçues par le bloc radio 2, et le codec 9 pour coder des données non vocales destinées à être émises par le bloc radio 2 et pour décoder des données non vocales reçues par le bloc radio 2. Par données vocales et non vocales, on entend des données correspondant respectivement à une communication vocale et à une communication non vocale. Le codec 9 et le vocodeur 8 utilisent ici respectivement un codage et un vocodage compatibles avec l'Internet, ici ceux de la norme GSM. Le vocodeur 8 est couplé à un bloc 8' de gestion de redondance destiné à ajouter en émission des bits de redondance aux données vocales vocodées afin de rendre le signal robuste.

Il est également prévu une mémoire de messages 12 et une mémoire de vocodage 11, toutes deux reliées au bloc de contrôle 1. La mémoire de messages 12 est destinée à contenir des messages reçus par le téléphone 10 et la mémoire de vocodage 11 est destinée à contenir un ou plusieurs programme de vocodage utilisables par le vocodeur 8.

Le bloc de contrôle 1 comporte un logiciel de téléphonie pouvant:
- exécuter un protocole de connexion téléphonique à l'Internet en l'espèce le protocole PPP ("Point to Point Protocol" - Protocole point à point),
- gérer une interface de saisie destinée à s'afficher à l'écran d'affichage 7 et permettant à un utilisateur de saisir des informations nécessaires pour établir une communication vocale sur l'Internet, comme cela sera explicité dans la description de l'établissement d'une communication sur l'Internet et
- télécharger depuis l'Internet un programme de vocodage de données vocales correspondant à une communication vocale sur l'Internet 101.

Le téléphone 10 dispose d'un accès au réseau de l'Internet 101, avec une adresse Internet, auprès d'un fournisseur 103 d'accès au réseau de l'Internet 101.

Le clavier de saisie 6 comprend une touche pour lancer l'exécution du protocole de connexion téléphonique à l'Internet 101.

Le terminal de l'Internet 20 représenté sur la figure 2 comprend, de façon connue, un bloc de contrôle 21, en l'espèce un microprocesseur, une interface homme-machine et un modem 22 de liaison à l'Internet.

L'interface homme machine comprend un écran de visualisation 23, un clavier de saisie 24, un microphone 25 et un haut-parleur 26, tous reliés au microprocesseur de contrôle 21, par l'intermédiaire d'une carte son 27 pour le microphone 25 et pour le haut-parleur 26, la carte son 27 étant destinée à convertir des signaux analogiques en données numériques et réciproquement.

Le modem 22 de liaison à l'Internet est destiné à relier le terminal de l'Internet 20, par connexion téléphonique, au fournisseur 104 d'accès au réseau de l'Internet 101. Le modem 22 est relié au microprocesseur de contrôle 21 et, par une ligne téléphonique 29, à un réseau de communication téléphonique, ici le réseau téléphonique commuté RTC 100. Un numéro d'appel sur le réseau RTC 100 est attribué à la ligne téléphonique 29 du terminal 20.

Une mémoire de messages 28 est en outre reliée au bloc de contrôle 21.

Le bloc de contrôle 21 comporte un logiciel de téléphonie sur l'Internet permettant à un utilisateur du terminal de communiquer vocalement, à travers l'Internet, avec un utilisateur d'un terminal distant lui-même pourvu d'un logiciel de téléphonie sur l'Internet. Le logiciel de téléphonie est notamment destiné :
- à exécuter le protocole PPP de connexion téléphonique à l'Internet 101,
- à coder en émission et à décoder en réception les données vocales et non vocales d'une communication à travers le réseau de l'Internet 101 et
- à gérer une interface de saisie permettant à un utilisateur de saisir les informations nécessaires pour établir une communication vocale sur l'Internet.

Le codage et le vocodage utilisés par le terminal de l'Internet 20 sont ici ceux de la norme GSM.

Le terminal 20 dispose d'un accès à l'Internet 101, avec une adresse Internet, auprès d'un fournisseur 104 d'accès à l'Internet.

L'établissement d'une communication entre le téléphone 10 et le terminal de l'Internet 20 à partir du téléphone 10 va d'abord être décrite.

Côté téléphone 10, afin d'établir la communication avec l'utilisateur du terminal de l'Internet 20, on appelle d'abord le numéro d'appel téléphonique du terminal de l'Internet 20. Dans l'hypothèse où le terminal de l'Internet 20 est connecté au réseau de l'Internet 101, le terminal 20 sonne occupée.

La tentative d'appel téléphonique classique ayant échoué, on établit une communication téléphonique avec le fournisseur 103 d'accès à l'Internet du téléphone 10 et on lance le protocole PPP de connexion téléphonique à l'Internet 101, en appuyant sur la touche correspondante du clavier de saisie 6.

Par ailleurs, à l'aide de l'interface de saisie, du microphone 4 et du clavier de saisie 6, on saisit les adresses Internet de provenance et de destination de la communication, autrement dit les adresses Internet du téléphone 10 et du terminal 20, et un message vocal destiné à être adressé au terminal de l'Internet 20. L'adresse de provenance, attribuée par le fournisseur d'accès 102 au téléphone 10, pourrait être préenregistrée dans une mémoire du téléphone 10, et dans ce cas ne serait pas saisie à chaque communication.

Par message vocal, on entend désigner les propos échangés lors d'une conversation, l'invention visant à établir une communication vocale entre le téléphone 10 et le terminal 20, comparable à une communication téléphonique ordinaire.

On transforme le message vocal en données vocales à l'aide du CAN 4' et on code les données vocales à l'aide du vocodeur 8 et on leur ajoute des bits de redondance à l'aide du bloc 8'. Les données correspondant aux adresses Internet de provenance et de destination du message sont également codées par le codec 9.

La connexion du téléphone 10 à l'Internet étant établie, on transmet depuis le téléphone 10 vers son fournisseur d'accès 103, à travers les réseaux de communication RTC 100 et cellulaire 102, reliés l'un à l'autre, un paquet de données contenant les données non vocales codées correspondant aux adresses Internet de provenance et de destination du message et les données vocales vocodées correspondant au message vocal, sous forme de signaux de type analogique, sous la commande du bloc radio 3. Sous le contrôle du fournisseur d'accès 103, le paquet de données est ensuite transmis vers l'adresse Internet du fournisseur 104 d'accès à l'Internet du terminal de l'Internet 20, indiquée par l'adresse Internet du terminal 20.

Le fournisseur d'accès 104 vérifie que le terminal 20 est bien connecté à l'Internet 101 avant de transmettre le paquet de données au terminal de l'Internet 20, à travers le réseau RTC 100.

Côté terminal de l'Internet 20, on reçoit le paquet de données, sous forme de signaux de type analogique que l'on démodule, puis on décode le paquet de données. On enregistre dans la mémoire de messages 28 les adresses Internet de provenance et de destination du message vocal. Puis, à l'aide de la carte son, on convertit les données vocales reçues et décodées en un signal analogique correspondant au message vocal transmis, et on diffuse celui-ci à l'aide du haut-parleur 5. L'utilisateur du terminal de l'Internet 20 entend alors le message vocal.

Côté terminal 20, on transmet en réponse un autre message vocal vers le téléphone 10, à travers le réseau de l'Internet 101, à l'aide du logiciel de téléphonie sur l'Internet.

Pour cela, on saisit le message vocal, à l'aide de l'interface de saisie, du clavier de saisie 24 et du microphone 25. On transforme le message vocal en données vocales à l'aide de la carte son. On code les données non vocales correspondant aux adresses Internet de provenance et de destination du message, qui sont respectivement les adresses du terminal 20 et du téléphone 10, et les données vocales correspondant au message vocal à l'aide du logiciel de téléphonie. Puis on module toutes ces données codées formant un paquet de données, à l'aide du modem 22, avant de transmettre le paquet de données vers le fournisseur d'accès 104 du terminal 20 à travers le réseau téléphonique RTC 100.

Après réception du paquet de données par le fournisseur d'accès 104, celui-ci se charge de le transmettre vers l'adresse Internet du fournisseur d'accès 103 du téléphone 10 indiquée par l'adresse Internet du téléphone 10. Le fournisseur d'accès 103 vérifie que le téléphone 10 est bien connecté à l'Internet 101 avant de lui transmettre le paquet de données à travers les réseaux de communication téléphonique ordinaire RTC 100 et cellulaire 102.

Côté téléphone 10, on reçoit le paquet de données, sous forme de signaux radio que l'on numérise à l'aide du bloc radio 3. On décode les données vocales à l'aide du vocodeur 8 et les données non vocales à l'aide du codec 9. Puis on diffuse au haut-parleur 26 le message vocal reçu.

Dans le cas où, côté téléphone 10, on sait que la ligne téléphonique 29 du terminal 20 est exclusivement réservée à une connexion du terminal 20 au réseau de l'Internet, on se connecte directement à l'Internet 101 afin d'établir une communication vocale avec le terminal 20 sur l'Internet 101, sans tenter au préalable d'appeler le numéro d'appel téléphonique du terminal 20.

L'établissement d'une communication entre le terminal de l'Internet 20 et le téléphone 10, à partir du terminal de l'Internet 20, va maintenant être décrite.

Côté terminal 20, on se connecte à l'Internet, par l'intermédiaire du fournisseur d'accès 104, en exécutant le protocole PPP de connexion téléphonique à l'Internet.

On saisit à l'aide de l'interface de saisie et du clavier de saisie 24 les adresses Internet de provenance et de destination de la communication, en l'espèce l'adresse du terminal 20 et celle du téléphone 10, ainsi qu'un message court, ici vocal, d'invitation à se connecter à l'Internet afin de communiquer vocalement à travers l'Internet 101, adressée au téléphone 10. L'adresse de provenance pourrait être préenregistrée définitivement dans le terminal. Puis, on code les données correspondant aux adresses Internet de provenance et de destination et le message court, toutes ces données formant un paquet de données. Enfin, on transmet le paquet de données, à travers le réseau RTC 100, vers le fournisseur d'accès 104 qui le transmet à travers le réseau de l'Internet 101 au fournisseur d'accès 103 du téléphone 10.

Après réception du paquet de données par le fournisseur d'accès 103, celui-ci transmet vers le téléphone 10 le paquet de données qui est stocké dans la mémoire de messages 12. En transmettant le message court au téléphone 10, le terminal de l'Internet 20 communique avec le téléphone 10 à travers l'Internet 101.

En consultant sa mémoire de messages 12, l'utilisateur du téléphone 10 prend connaissance du message court et de l'adresse Internet du terminal de l'Internet 20 puis établit une communication vocale avec le terminal 20, comme explicité précédemment.

Si le fournisseur d'accès du téléphone 10 ne propose pas le service consistant à transmettre vers le téléphone 10 le message court transmis à travers l'Internet, le terminal 20 peut transmettre le message court vers une passerelle capable de transformer des messages Internet en messages téléphoniques du type SMS (Short Message Service - Service de Message Court).

On pourrait également envisager de formater le message court dans un format reconnaissable par le téléphone 10 pour qu'il induise un appel automatique depuis le téléphone 10 vers le terminal 20, après éventuellement validation par l'utilisateur du téléphone 10.

Dans le cas où le vocodage du vocodec 8 du téléphone 10 n'est pas compatible avec le vocodage du logiciel de téléphonie du terminal 20, on télécharge dans le téléphone 10 depuis le fournisseur 103 d'accès à l'Internet du téléphone 10, un programme de vocodage compatible avec le logiciel de téléphonie du terminal 20, et on l'enregistre dans la mémoire de vocodage 11.

Dans la description qui vient d'être faite, après avoir échoué côté téléphone 10 dans la tentative d'appel du terminal 20 par le réseau téléphonique ordinaire 100, on tente d'établir une communication vocale à travers l'Internet 101, en appuyant sur une touche du clavier de saisie 6. On pourrait également envisager, suite à l'échec de la tentative d'appel téléphonique classique, de tenter automatiquement d'établir la communication entre le terminal 20 et le téléphone 10 à travers l'Internet, sans que l'utilisateur du téléphone 10 ne s'en aperçoive.

Le terminal pourrait également être relié à un réseau numérique de communication RNIS et, dans ce cas, émettre et recevoir des signaux numériques.

Dans une variante plus perfectionnée du téléphone, ce dernier comprend une mémoire contenant un annuaire de terminaux comprenant une pluralité de noms de terminaux de l'Internet auxquels sont associés un numéro d'appel sur le réseau de la téléphonie et une, ou plusieurs, adresse Internet. Pour établir une communication avec un terminal de l'Internet depuis le téléphone, l'utilisateur indique au téléphone le nom du correspondant à joindre, et le téléphone tente automatiquement de joindre le correspondant par son numéro d'appel téléphonique puis, en cas d'échec, par son, ou ses, adresses Internet.

On pourrait également envisager d'inverser l'ordre des tentatives, en tentant d'abord de joindre le correspondant par Internet puis, en cas d'échec, par le réseau téléphonique, l'ordre des tentatives d'appel par Internet et par le réseau téléphonique pouvant être choisi en fonction coût des communications.

La mémoire contenant l'annuaire de terminaux pourrait être contenue par exemple dans une carte SIM.

Dans le cas où le fournisseur d'accès du côté appelé propose un service de type "finger" (pointeur) permettant, sur requête, de savoir si un terminal disposant d'un accès à l'Internet auprès de ce fournisseur est connecté, on pourrait envisager que le côté appelant transmette, avant de tenter d'établir la communication, une requête préalable au fournisseur d'accès du côté appelé pour demander si ce dernier est connecté.

Enfin, on pourrait prévoir que le téléphone 10 puisse envoyer au terminal de l'Internet 20 un message d'invitation à se connecter, par l'Internet 101.

## Revendications

1. Procédé pour établir une communication entre, d'un côté, un terminal de l'Internet (20), avec son adresse Internet, comprenant des moyens de connexion téléphonique au réseau de l'Internet (101), par une ligne téléphonique (29) d'un réseau de communication téléphonique (100), et des moyens de téléphonie sur l'Internet (101) comportant un logiciel de téléphonie sur l'Internet et au moins un haut-parleur (26), et, de l'autre côté, un téléphone (10) disposant d'un accès à l'Internet, procédé au cours duquel, de l'un des côtés terminal (20) et téléphone (10), on se connecte à l'Internet (101) et on communique avec l'autre côté à travers le réseau de l'Internet (101), procédé **caractérisé par le fait qu'**on télécharge depuis l'Internet (101) dans le téléphone (10) des moyens de vocodage pour coder des données vocales correspondant à la communication vocale à établir sur l'Internet (101).

2. Procédé selon la revendication 1 dans lequel, dans le cas où on se connecte à l'Internet (101) côté téléphone (10), on saisit un message vocal que l'on transforme en données vocales, on code lesdites données vocales puis on les transmet vers l'adresse Internet du terminal de l'Internet (20), à travers le réseau de l'Internet (101), et, dans le cas où le terminal de l'Internet (20) est connecté à l'Internet (101), côté terminal, on reçoit les données vocales, on les décode puis on les transforme en message vocal que l'on diffuse à l'aide du haut-parleur (26).

3. Procédé selon l'une des revendications 1 et 2, dans lequel le téléphone (10) disposant d'un accès à l'Internet (101) auprès d'un fournisseur (103) d'accès à l'Internet (101), côtés téléphone, on établit une communication téléphonique avec ledit fournisseur d'accès (103) et, au cours de la communication téléphonique, on exécute un protocole de connexion téléphonique à l'Internet (101).

4. Procédé selon l'une des revendications 1 à 3, dans lequel, un numéro d'appel téléphonique sur le réseau de téléphonie (100) étant attribué à la ligne téléphonique (29) du terminal de l'Internet (20), côté téléphone, on tente d'appeler ledit numéro d'appel téléphonique et on se connecte à l'Internet pour établir une communication vocale avec le terminal de l'Internet (20) si la ligne téléphonique (29) du terminal (20) est occupée.

5. Procédé selon la revendication 1, dans lequel, dans le cas où on se connecte à l'Internet (101) côté terminal (20), on transmet vers le téléphone (10), à travers l'Internet (101), un message court d'invitation à se connecter à l'Internet (101) afin d'établir une communication vocale avec le terminal (20).

6. Téléphone pour la mise en oeuvre du procédé de la revendication 1, comprenant des moyens (8,9) de codage et de décodage de données, agencés pour coder et décoder des données correspondant à une communication vocale sur l'Internet (101), et des moyens pour exécuter un protocole de connexion téléphonique à l'Internet (101), téléphone **caractérisé par le fait qu'** il comprend des moyens pour télécharger depuis l'Internet (101) un programme de codage et de décodage de données vocales d'une communication vocale sur l'Internet compatible avec au moins un logiciel de téléphonie sur l'Internet pour terminal de l'Internet.

7. Téléphone selon la revendication 6, dans lequel il est prévu un annuaire de terminaux contenant une pluralité de noms de terminaux auxquels sont associés un numéro d'appel sur un réseau de téléphonie et au moins une adresse sur le réseau de l'Internet, et des moyens pour automatiquement tenter d'établir une communication avec l'un des terminaux en passant par l'un des deux réseaux, de téléphonie et de l'Internet, puis en cas d'échec, par l'autre des réseaux.

## Patentansprüche

1. Verfahren zum Herstellen einer Verbindung zwischen einerseits einem Internetanschluss (20) mit seiner Internetadresse, der Einrichtungen zur Telefonverbindung mit dem Netz des Internets (101) über eine Telefonleitung (29) eines Telefonnachrichtennetzes (100) und Einrichtungen zum Telefonieren über das Internet (101), die eine Software zum Telefonieren über das Internet und mindestens einen Lautsprecher (26) umfasst, und andererseits ein Telefon (10) umfasst, das über einen Zugang zum Internet verfügt, wobei im Verlauf des Verfahrens seitens des Anschlusses (20) oder des Telefons (10) ein Einwählen ins Internet (101) durchgeführt und mit der anderen Seite über das Netz des Internets (101) kommuniziert wird, wobei das Verfahren
**dadurch gekennzeichnet ist, dass**
aus dem Internet (101) auf das Telefon (10) Vocodermittel geladen werden, um Sprachdaten zu codieren, die der über das Internet (101) herzustellenden Sprachkommunikation entsprechen.

2. Verfahren nach Anspruch 1,
wobei im Falle, dass man sich seitens des Telefons (10) in das Internet (101) einwählt, eine Sprachnachricht erfasst wird, die in Sprachdaten umgewandelt wird, die Sprachdaten codiert und dann zur Internetadresse des Internetanschlusses (20) über das Netz des Internets (101) übertragen werden, und im Falle, dass sich der Internetanschluss (20) anschlussseitig ins Internet (101) einwählt, die Sprachdaten empfangen werden, sie decodiert
und dann zu einer Sprachnachricht umgewandelt werden, die mittels des Lautsprechers (26) ausgestrahlt wird.

3. Verfahren nach einem der Ansprüche 1 und 2,
wobei, wenn das Telefon (10), das über einen Zugang zum Internet (101) bei einem Internet-Provider (103) verfügt, der einen Zugang zum Internet (101) bereitstellt, telefonseitig eine Telefonverbindung mit dem Internet-Provider (103) hergestellt und im Verlauf der Telefonverbindung ein Protokoll zum telefonischen Einwählen in das Internet (101) ausgeführt wird.

4. Verfahren nach einem der Ansprüche 1 bis 3,
wobei, wenn der Telefonleitung (29) des Internetanschlusses (20) eine telefonische Rufnummer im Telefonnetz (100) zugeteilt ist, telefonseitig versucht wird, diese telefonische Rufnummer anzurufen und sich ins Internet einzuwählen, um eine Sprachverbindung mit dem Internetanschluss (20) herzustellen, wenn die Telefonleitung (29) des Anschlusses (20) besetzt ist.

5. Verfahren nach Anspruch 1,
wobei im Falle, dass man sich seitens des Anschlusses (20) in das Internet (101) einwählt, über das Internet (101) an das Telefon (10) eine Aufforderungskurznachricht verschickt wird, sich in das Internet (101) einzuwählen, um eine Sprachverbindung mit dem Anschluss (20) herzustellen.

6. Telefon zum Ausführen des Verfahrens nach Anspruch 1, das Einrichtungen (8, 9) zum Codieren und Decodieren von Daten, die so eingerichtet sind, dass sie die Daten codieren und decodieren, die einer Sprachverbindung über das Internet (101) entsprechen, und Einrichtungen umfasst, um ein Protokoll zur telefonischen Einwahl ins Internet (101) auszuführen, wobei das Telefon
**dadurch gekennzeichnet ist, dass**
es Einrichtungen umfasst, um aus dem Internet (101) ein Programm zur Codierung und Decodierung von Sprachdaten einer Sprachverbindung über das Internet zu laden, das zu mindestens einer Software zum Telefonieren über das Internet für den Internetanschluss kompatibel ist.

7. Telefon nach Anspruch 6,
bei dem ein Telefonanschlussverzeichnis vorgesehen ist, das eine Vielzahl von Namen von Anschlüssen enthält, denen eine Rufnummer in einem Telefonnetz und mindestens eine Adresse im Netz des Internets zugeordnet sind, und Einrichtungen, um automatisch zu versuchen, eine Verbindung mit einem der Anschlüsse über eines der beiden Netze, nämlich Telefon und Internet, und im Falle eines Fehlschlags über das andere der Netze herzustellen.

## Claims

1. Process for establishing communication between, on the one hand, an Internet terminal (20), having its Internet address, comprising means for telephone connection to the Internet network (101) via a telephone line (29) of a telephone communication network (100), and means for telephony via the internet (101) comprising software for telephony via the Internet and at least one loudspeaker (26), and, on the other hand, a telephone (10) having Internet access, a process during which a connection is made to the Internet (101) from one of the terminal side (20) and the telephone side (10) and communication is carried out with the other side via the Internet network (101), the process being **characterised in that** vocoding means are downloaded from the Internet (101) to the telephone (10) in order to encode voice data corresponding to the voice communication to be established via the Internet (101).

2. Process as claimed in claim 1, wherein in the case where a connection is made to the Internet (101) on the telephone side (10), a voice message is input which is converted into voice data, the said voice data are encoded and then transmitted to the Internet address of the Internet terminal (20) via the Internet network (101), and, in the case where the Internet terminal (20) is connected to the Internet (101) on the terminal side, the voice data are received, they are decoded, then they are converted into a voice message which is output using the loudspeaker (26).

3. Process as claimed in any one of claims I and 2, wherein since the telephone (10) has access to the Internet (101) via a provider (103) of access to the Internet (101) on the telephone side, telephone communication is established with the said access provider (103) and, during the telephone communication, a protocol is executed for telephone connection to the Internet (101).

4. Process as claimed in any one of claims 1 to 3, wherein, since a telephone number on the telephone network (100) is allocated to the telephone line (29) of the Internet terminal (20) on the telephone side, an attempt is made to call the said telephone number and a connection is made to the Internet in order to establish voice communication with the Internet terminal (20) if the telephone line (29) of the terminal (20) is occupied.

5. Process as claimed in claim 1, wherein in the case where a connection is made to the Internet (101) on the terminal side (20) a short message is transmitted via the Internet (101) to the telephone (10) inviting connection to the Internet (101) in order to establish voice communication with the terminal (20).

6. Telephone for implementing the process of claim 1, comprising means (8, 9) for encoding and decoding data, arranged to encode and decode data corresponding to voice communication via the Internet (101), and means for executing a protocol for telephone connection to the Internet (101), the telephone being **characterised in that** it has means for downloading from the Internet (101) a programme for encoding and decoding voice data of voice communication via the Internet, which is compatible with at least one item of software for telephony via the Internet for the Internet terminal.

7. Telephone as claimed in claim 6, wherein a directory of terminals is provided containing a plurality of terminal names with which a telephone network number and at least one Internet network address are associated, and means are provided for automatically attempting to establish communication with one of the terminals via one of the two networks, i.e. the telephone network and Internet network, and then, if unsuccessful, via the other of the networks.
